# EUROPEAN PATENT SPECIFICATION

(11) **EP 4 017 907 B1**
(45) Date of publication and mention of the grant of the patent: **15.05.2024**
(21) Application number: 20754292.9
(22) Date of filing: 18.08.2020
(51) Int. Cl.: C08J 9/36, C09D 161/28

(54) **FREE-FLOWING FOAM PARTICLES AND FIRE-RESISTANT PARTICLE FOAM MOLDINGS**
FLIESSFÄHIGE SCHAUMPARTIKEL UND FLAMMFESTE PARTIKELSCHAUMFORMTEILE
PARTICULES DE MOUSSE À ÉCOULEMENT LIBRE ET MOULAGES EN MOUSSE DE PARTICULES IGNIFUGES

(30) Priority: 21.08.2019 EP 19192751
(43) Date of publication of application: 29.06.2022
(73) Proprietor: BASF SE, 67056 Ludwigshafen (DE)
(72) Inventor: QUELL, Aggeliki, 67056 Ludwigshafen (DE); GUTTING, Andreas, 67056 Ludwigshafen (DE); KELLER, Andreas, 67056 Ludwigshafen (DE); AHMADNIAN, Fatemeh, 67056 Ludwigshafen (DE); BELLIN, Ingo, 67056 Ludwigshafen (DE)
(74) Representative: BASF IP Association
(86) International application number: PCT/EP2020/073095
(87) International publication number: WO 2021/032738

(56) References cited:
- EP-A1- 3 333 216
- US-A- 6 084 008
- US-A1- 2011 230 578
- US-B1- 6 228 914

## Description

The present invention according to the appended claims relates to free-flowing foam particles based on thermoplastic polymer foam particles and a coating based on aminoplast resins and intumescent powders for fire resistant particle foam moldings and further to a process for producing such coated foam particles and particle foam moldings.

WO 2011/113795 A2 and US 2011/0230578 disclose composite foam moldings made from pre-foamed particles of expandable polystyrene (EPS), optionally a blowing agent, an aminoplast resin, one or more flame retardant organic phosphorous compounds and/or expandable graphite as fire-resistant insulating material. The mixture of pre-foamed particles and aminoplast resin is not free-flowing and cannot be used in commercially available steam-chest molding equipment.

EP 3 333 216 A1 discloses the use of a coating composition comprising aluminum hydroxide as a mineral flame retardant, an adduct or condensation product of melamine or urea and formaldehyde, a hardener and water for coating foam beads based on polystyrene, polyolefins or polyurethanes to increase fire resistance of foam moldings. Flame retardant properties are not sufficient for all applications and pentane loss of the prefoamed beads is too high for secondary expandability.

PCT/EP2019/054168 discloses a flame-retardant molding obtained by compression molding and curing of a mixture comprising a melamine-formaldehyde precondensate, prefoamed expandable polystyrene particles and inorganic fillers or flame retardants.

US 6,228,914 B1 discloses an aqueous composition containing an acid-hardenable binder of a melamine compound, an acidic phosphorous compound and expandable graphite flakes. The composition is curable to an intumescent composition and preferably employed for coating or impregnating articles made of wood, plastic composites, plastic foams, rubber, gypsum boards, metal or fibre reinforced plastic composites.

US 6 084 008 A discloses a fire-retardant coating composition for lignocellulosic materials which comprises expandable graphite particles, an absorbent material, a polymeric binder, a car-bonific material, a blowing agent, and a wetting agent. The expandable graphite particles include from about 20 to about 95 % by weight of the combined amount of the expandable graphite particles and the absorbent material. The polymeric binder comprises from about 5 to about 50 % by weight of the combined amount of the polymeric binder, the expandable graphite particles, and the solid absorbent material.

The object of the present invention is to provide free-flowing foam particles based on thermoplastic polymer foam particles with an intumescent coating and a process for producing free-flowing foam particles to manufacture fire resistant particle foam moldings, which are preferably halogen-free. The free-flowing foam particles should preferably show a low loss rate of blowing agent with storage time.

To solve the problem, the present invention provides a process for producing coated foam particles comprising mixing a coating composition comprising
(A) from 10 to 50 wt.-% of an aminoplast resin,
(B) from 10 to 50 wt.-% of an intumescent powder, selected from ammonium phosphate and expandable graphite,
(C) from 0 to 60 wt.-% of water,
(D) from 0 to 10 wt.-% of an acidic hardener, selected from hydrochloric acid, sulfuric acid, phosphoric acid, nitric acid, formic acid, acetic acid, oxalic acid, toluene sulfonic acids, amido sulfonic acids and acid anhydrides,
(E) from 0 to 5 wt.-% of an organic additive, selected from organic fillers, dyes, pigments, surfactants or plasticizers different from components (A) and (D),
(F) from 0 to 50 wt.-% of an inorganic filler, selected form pigments and minerals different from component (B),
with foam particles based on thermoplastic polymer foam particles and drying the coated foam particles.

The composition may comprise
(A) from 15 to 40 wt.-% of an aminoplast resin,
(B) from 20 to 40 wt.-% of the intumescent powder,
(C) from 20 to 50 wt.-% of water,
(D) from 0.1 to 5 wt.-% of the acidic hardener,
(E) from 0 to 4 wt.-% of the organic additive,
(F) from 0 to 50 wt.-% of the inorganic filler.

Further the composition may comprise
(A) from 15 to 40 wt.-% of an aminoplast resin,
(B) from 20 to 30 wt.-% of expandable graphite,
(C) from 20 to 50 wt.-% of water,
(D) from 0.1 to 5 wt.-% of the acidic hardener,
(E) from 0 to 4 wt.-% of the organic additive,
(F) from 20 to 30 wt.-% of gypsum.

Preferably the pH-value of the composition is in the range from 3 to 10, preferably in the range from 4 to 7, determined according to DIN EN ISO 787-9:2019-06. The pH-value depends on the components (A) to (F) and may be adjusted by the amount of component (D).

The composition may consist of the components (A) to (F). The sum of components (A), (B), (C), (D), (E) and (F) may be 100%.

### Component A)

Preferably the aminoplast resin (A) is a precondesate of formaldehyde with melamine, urea, urethanes, cyanamide or dicyanamide, aromatic amines and/or sulfonamides or mixtures thereof. Particular preference is given to melamine-formaldehyde (MF) precondensates. The precon-desates may be partially or fully etherified with alcohols, preferably C₁-C₄- alcohols, in particular methanol or ethanol

### Component B)

The composition comprises as component B) an intumescent powder which forms a carbon foam upon exposure to fire. In the appended claims the the intumescent powder comprises powders based on ammonium polyphosphate and/ or expandable graphite. Preferred expandable graphite's have a pH-value between 3 and 9, more preferably between 6 and 8 in an aqueous slurry, determined according to DIN EN ISO 787-9:2019-06. The expandability (1000°C) of the expandable graphite is preferably in the range from 50 to 800 ml/g.

### Component C)

The aminoplast resin is usually used in form of a solution or dispersion in water. Water can therefore be present in the composition as component C).

### Component D)

Organic acids and inorganic acids can be used as hardener D) to continue condensation of the aminoplast resin, examples being hydrochloric acid, sulfuric acid, phosphoric acid, nitric acid, formic acid, acetic acid, oxalic acid, toluenesulfonic acids, amidosulfonic acids and also acid anhydrides. Nitric acid is the preferred curative used in the processes of the present invention.

### Component E)

The composition may further comprise one or more organic additives as component E), such as fillers, dyes, pigments, surfactants or plasticizers. Plasticizers may be advantageously used to enhance compatibility with foam particles or fillers with the aminoplast resin. The organic additives may be premixed with components (A) to (F).

### Component F)

The composition may further comprise one or more inorganic fillers as component F), such as pigments or minerals. Preferably gypsum is used as filler. The fillers may be premixed with components (A) to (F). Preferably fillers are used as synergist to improve fire resistance and are premixed with the intumescent power.

Coating composition comprising 10 to 50 wt.-% gypsum as inorganic filler are preferred for lower length of damaged material, determined according to DIN 54837: 2007-12 (Testing of materials, small components and component sections for rail vehicles -Determination of burning behaviour using a gas burner). Preferably is the weight ratio of component B) to Component F) in the range from 2:1 to 1:2. Most preferably the coating composition comprises expandable graphite and gypsum in the weight ratio in the range from 2:1 to 1:2.

In one embodiment the coating composition preferably consists of
(A) from 15 to 30 wt.-% of a melamine-formaldehyde resin,
(B) from 20 to 40 wt.-% of expandable graphite,
(C) from 30 to 50 wt.-% of water,
(D) from 0.1 to 5 wt.-% of an acidic hardener,
wherein the pH-value of the composition is in the range from 4 to 7, determined according to DIN EN ISO 787-9:2019-06.

The coating composition may consists of
(A) from 15 to 30 wt.-% of a melamine-formaldehyde resin,
(B) from 20 to 30 wt.-% of expandable graphite,
(C) from 30 to 50 wt.-% of water,
(D) from 0.1 to 5 wt.-% of an acidic hardener,
(F) from 20 to 30 wt.-% of gypsum
wherein the pH-value of the composition is in the range from 4 to 7, determined according to DIN EN ISO 787-9:2019-06.

The composition of the present invention is used as coating composition for the preparation of free-flowing foam particles for producing fire-resistant particle foam moldings in conventional steam-chest molding equipment.

A preferred process for producing coated foam particles according to the invention comprises mixing the above-described composition with foam particles based on thermoplastic polymers and drying the coated foam particles at a temperature in the range from 20 to 100 °C for 5 to 500 minutes, preferably in the range from 20 to 40 °C for 10 to 60 minutes. Preferably the drying time may be reduced if a stream of air or inert gas is applied.

The thermoplastic polymer foam particles may be any directly foamed thermoplastic polymer in particle form or prefoamd particles from expandable thermoplastic polymer particles. Preferably the foam particles are pre-foamed expandable polystyrene (EPS) or expanded polypropylenene (EPP).

The adhesion between the thermoplastic polymer foam particles and the aminoplast resin coating may be improved by using thermoplastic polymer foam particles with a certain surface roughness. Preferred thermoplastic polymer foam particles are therefore prefoamed particles from expandable styrene polymers (EPS), which have been produced by a melt-extrusion process or expandable styrene polymers produced by a suspension-polymerization process and precoated with a coating of zinkstearat, glycerol esters or antistatics before pre-foaming.

A preferred process for producing coated foam particles comprise the steps:
(a) pre-expanding expandable polystyrene to foam particles with a density in the range from 10 to 30 kg/m³,
(b) mixing the foam particles from step (a) with a composition according to the invention as described above,
(c) drying the coated foam particles at a temperature in the range from 20 to 100 °C for 5 to 500 minutes, preferably in the range from 20 to 40 °C for 10 to 60 minutes.

Subject of the invention are further free-flowing foam particles obtainable by the process according to the invention. Free-flowing means that the particles do not stick together. The flowability of the coated foam particles determined according to DIN EN ISO 6186:1998-8 using a funnel with an outlet diameter of 25 mm is preferably below 10 seconds, more preferably below 5 seconds, most preferably between 1 and 4 seconds.

Preferred free-flowing coated foam particles are based on thermoplastic polymers, having at least a coating comprising:
(A) from 10 to 50 wt.-% of an aminoplast resin,
(B) from 10 to 50 wt.-% of the intumescent powder,
(C) from 0 to 60 wt.-% of water,
(D) from 0 to 10 wt.-% of the acidic hardener,
(E) from 0 to 5 wt.-% of the organic additive,
(F) from 0 to 50 wt.-% of the inorganic filler.

The free-flowing coated foam particles may be based based on polystyrene, having at least a coating consisting of:
(A) from 15 to 30 wt.-% of a melamine-formaldehyde resin,
(B) from 20 to 40 wt.-% of expandable graphite,
(C) from 0 to 10 wt.-% of water,
(D) from 0.1 to 5 wt.-% of the acidic hardener.

The coating composition may consist of
(A) from 15 to 30 wt.-% of a melamine-formaldehyde resin,
(B) from 20 to 30 wt.-% of expandable graphite,
(C) from 0 to 10 wt.-% of water,
(D) from 0.1 to 5 wt.-% of an acidic hardener,
(F) from 20 to 30 wt.-% of gypsum.

Preferably in the free-flowing coated foam particles the weight ratio of coating to uncoated foam particles is in the range from 1 : 1 to 3 : 1, more preferably in the range from 1.5 : 1 to 2.5 : 1.

The free-flowing coated foam particles according to the invention preferably have a bulk density in the range from 20 to 50 kg/m³.

The free-flowing coated foam particles according to the invention preferably are halogen-free. Preferably the free-flowing coated foam particles contain less than 0.1 wt.-%, more preferably less than 0.01 wt.-% halogen, i.e. fluorine, chlorine, bromine or iodine. The weight percent refer to the individual halogen's fluorine, chlorine, bromine and iodine. Preferably also the sum of all halogens is less than 0.1 wt.-%, more preferably less than 0.01 wt.-%. The halogen content refers to any halogen component in the free-flowing coated foam particles, which may be determined by atomic absorption spectroscopy or elemental analysis.

Subject of the invention is further a particle foam molding, which is obtainable by steam-chest molding of coated foam particles according to the invention.

The particle foam molding according to the invention preferably has a density in the range from 10 to 50 kg/m³.

The thermal conductivity (λ) of the insulation sheets determined at 10°C according to DIN EN 12667:2001-05 is preferably between 30 to 40 mW/(m*K).

The THR (Total heat release) of the particle foam molding according to the invention after 600 seconds is preferably below 10 MJ/m², more preferably below 8 MJ/m². The PHRR (Peak heat release rate) is preferably below 150 kW/m², more preferably below 120 kW/m², most preferably below 100 kW/m²). The total heat release (THR) and Peak heat release rate (PHRR) of insulation sheets is determined according to ISO 5660-1:2015 using a Cone Calorimeter.

The particle foam molding according to the invention preferably has a maximum flame high below 20 cm, determined according to according to DIN 54837: 2007-12 (Testing of materials, small components and component sections for rail vehicles -Determination of burning behaviour using a gas burner).

The particle foam molding according to the invention are preferably used for thermal insulation of buildings.

Hereinafter, the present invention is described in more detail.

### Examples

### Raw materials:

| | |
|---|---|
| Neopor^{®} P 5200 | Graphite-containing EPS, pentane content ca. 5.3 wt.-%, bead size 1.2 - 1.6 mm, non-flame retardant, produced by extrusion |
| Neopor^{®} F 2300 | Graphite-containing EPS, pentane content ca. 5.3 wt.-%, bead size 0.8 - 1. mm, flame retardant, produced by suspension polymerization |
| Neopor^{®} F 5200 Plus | Graphite-containing EPS, pentane content ca. 5.3 wt.-%, bead size 1.2 - 1.6 mm, flame retardant, produced by extrusion |
| MF-resin | Kauramin^{®} Moulding compound resin 700 powder, melamine-formaldehyde condensation product, m.p. ca. 100°C, pH ca. 9 (DIN ISO 976), bulk density ca. 700 kg/m³ |
| IP1 | Expandable graphite ES 100 C10 from Graphit Kropfmühl GmbH, particle size distribution: min. 80% of particles below 150 µm, ash content max. 8 %, expandability 100 ml/g, pH 8.2. |
| IP2 | Expandable graphite ES 700 F5 pH from Graphite Kropfmühl GmbH, particle size distribution: min. 70% of particles above 300 µm, no ash content, expandability 700 ml/g, pH value 8.0 |
| ATH | Aluminum trihydroxide (ATH) |
| Gypsum | REA Gypsum (CaSO₄ 2 H₂O) |

### Measurements:

Flowability of foam particles was determined according to DIN EN ISO 6186:1998-8, method 8 with a flowability tester as outflow time using a funnel with an outlet diameter of 25 mm and a height of 120 mm. The flowability is reported as mean value of 3 measurements of the outflow time in seconds.

pH-values were determined in aqueous suspension according to DIN EN ISO 787-9:2019-06.

Thermal conductivity (λ) of insulation sheets was determined at 10°C according to DIN EN 12667:2001-05.

Total heat release (THR) after 600 seconds and Peak heat release rate (PHRR) of insulation sheets was determined according to ISO 5660-1:2015 using a Cone Calorimeter.

Maximum length of damaged material was determined according to according to DIN 54837: 2007-12 (Testing of materials, small components and component sections for rail vehicles - Determination of burning behaviour using a gas burner).

### Example 1:

Graphite-containing EPS particles (Neopor^{®} F 2300) were prefoamed with steam to foam particles with a bulk density of 15 kg/m³. A coating mixture was prepared from of 21.4 wt.-% MF-resin, 45.9 wt.-% water, 32.4 wt.-% IP1 and 0.3 wt.-% nitric acid. The pH-Value of coating mixture was 5.6. 27 parts by weight of the prefoamed particles were coated with 100 parts of the coating mixture (weight ratio of solids of coating composition to prefoamed particles = 2 : 1) in a drum mixer for 10 minutes at 21°C. The coated foam beads were filled in a bag and dried for 2 hours at 80°C in a compartment dryer. The bag was occasionally moved by hand.

### Example 2:

Example 1 was repeated with graphite-containing EPS particles (Neopor^{®} P 5200)

### Example 3:

Example 1 was repeated with IP2. The pH-Value of the coating mixture was 5.3

### Example 4:

Example 2 was repeated with IP2.

### Example 5:

Graphite-containing EPS particles (Neopor^{®} F 5200 Plus) were prefoamed with steam to foam particles with a bulk density of 15 kg/m³. A coating mixture was prepared from of 21.4 wt.-%

MF-resin, 45.9 wt.-% water, 32.4 wt.-% IP2 and 0.3 wt.-% nitric acid. The pH-Value of coating mixture was 5.6. 27 parts by weight of the prefoamed particles were coated with 100 parts of the coating mixture (weight ratio of solids of coating composition to prefoamed particles = 2 : 1) in a drum mixer for 10 minutes at 21°C. The coated foam beads were dried using an air flow of up to 100 m³/min for 30-40 min. The air flow temperature was in the range of 20 - 40°C. The beads were moved occasionally during this step.

### Example 6:

Graphite-containing EPS particles (Neopor^{®} F 5200 Plus) were prefoamed with steam to foam particles with a bulk density of 15 kg/m³. A coating mixture was prepared from of 21.4 wt.-% MF-resin, 45.9 wt.-% water, 16.2 wt.-% IP1, 16.2 wt.-% of gypsum and 0.3 wt.-% nitric acid. 27 parts by weight of the prefoamed particles were coated with 100 parts of the coating mixture (weight ratio of solids of coating composition to prefoamed particles = 2 : 1) in a drum mixer for 10 minutes at 21°C. The coated foam beads were dried using an air flow of up to 100 m³/min for 30-40 min. The air flow temperature was in the range of 20 - 40°C. The beads were moved occasionally during this step.

### Example 7:

Graphite-containing EPS particles (Neopor^{®} F 5200 Plus) were prefoamed with steam to foam particles with a bulk density of 15 kg/m³. A coating mixture was prepared from of 21.4 wt.-% MF-resin, 45.9 wt.-% water, 10.8 wt.-% IP1, 21.6 wt.-% of gypsum and 0.3 wt.-% nitric acid. 27 parts by weight of the prefoamed particles were coated with 100 parts of the coating mixture (weight ratio of solids of coating composition to prefoamed particles = 2 : 1) in a drum mixer for 10 minutes at 21°C. The coated foam beads were dried using an air flow of up to 100 m³/min for 30-40 min. The air flow temperature was in the range of 20 - 40°C. The beads were moved occasionally during this step.

### Examples 8 - 9

Examples 8 - 9 were prepared in the same manner as Example 6 and 7 with the EPS-particles and ratio of expandable graphite IP1 and gypsum as indicated in Table 2. Using mixtures of expandable graphite and gypsum gives acceptable results in both, the Total heat release (THR) after 600 seconds in the Cone Calorimeter test as well as a low maximum flame height in the gas burner test.

### Comparative Example C1:

Graphite-containing EPS particles (Neopor^{®} F 2300) were prefoamed with steam to foam particles with a bulk density of 15 kg/m³ and converted without applying the coating mixture into an insulating sheet in a conventional steam-chest molder.

### Comparative Example C2:

Graphite-containing EPS particles (Neopor^{®} F 2300) were prefoamed with steam to foam particles with a bulk density of 15 kg/m³. A coating mixture was prepared from of 21.4 wt.-% MF-resin, 45.9 wt.-% water, 32.4 wt.-% ATH and 0.3 wt.-% nitric acid. 27 parts by weight of the pre-foamed particles were coated with 100 parts of the coating mixture (weight ratio solids of coating composition: prefoamed particles = 2 : 1) in a drum mixer for 10 minutes at 21°C. The coated foam beads were filled in a bag and dried for 2 hours at 80°C in a compartment dryer. The bag was occasionally moved by hand.

The characteristics of the foam particles of Examples 1 and 2 and Comparative Examples C1 and C2 are summarized in Table 1.

**Table 1: Composition and properties of coated foam particles.**

| Example | EPS | Coating | Pentane loss after 20 days | Flowability [sec] | Density [kg/m³] |
|---|---|---|---|---|---|
| 1 | F 2300 | graphite/MF | 50 wt.-% | 3 | 40.0 |
| 2 | P 5200 | graphite/MF | 30 wt.-% | 2 | 34.6 |
| 6 | F 5200 Plus | IP1/gypsum (1:1) /MF-resin | - | 2.7 | 42.6 |
| 7 | F 5200 Plus | IP1/gypsum (1:2)/MF-resin | - | 2.7 | 37.8 |
| C1 | F 2300 | none | 70 wt.-% | 4 | 15.0 |
| C2 | F 2300 | ATH/MF | 65 wt.-% | - | 43.7 |

### Particle foam moldings

The resulting free-flowing (coated) foam particles from Examples 1 to 11 and Comparative Examples C1 and C2 and were converted into particle foam moldings in the form of an insulating sheet in a conventional steam-chest molder. Table 2 and 3 show the results measured on the insulating sheets. The maximum length of damaged material of the sheet from Example 5 was 15 cm after 3 minutes in the burning test according to DIN 54837: 2007-12.

**Table 2: Total heat release (THR), Peak heat release rate (PHRR) and thermal conductivity of insulation sheets**

| Sheets from Example | EPS | Coating | THR [MJ/m²] | PHRRₘₐₓ [kW/m²] | Thermal conductivity [mW/mK] | Density [kg/m³] |
|---|---|---|---|---|---|---|
| 1 | F 2300 | IP1/MF-resin | 9.2 | 96.7 | 37.8 | 40.0 |
| 2 | P 5200 | IP1/MF-resin | 11.9 | 118.4 | 38.8 | 34.6 |
| 3 | F 2300 | IP2/MF-resin | 7.3 | 87.3 | 34.7 | 34.0 |
| 4 | P 5200 | IP2/MF-resin | 8.7 | 92.9 | 33.7 | 30.8 |
| 5 | F 5200 Plus | IP2/MF-resin | 7.6 | 85.5 | 38.3 | 32.8 |
| 6 | F 5200 Plus | IP1/gypsum (1:1) /MF-resin | 14.6 | 127.0 | 41.5 | 42.6 |
| 7 | F 5200 Plus | IP1/gypsum (1:2)/MF-resin | 18.8 | 131.0 | 35.2 | 37.8 |
| 8 | F 5200 Plus | IP1/MF-resin | 10.5 | | 36.4 | 41.1 |
| 9 | P 5200 | IP1/gypsum (1:1) /MF-resin | 18.9 | | 40.1 | 35.6 |
| C1 | F 2300 | None | 25.7 | 248.8 | 32.3 | 15.0 |
| C2 | F 2300 | ATH/MF | 34.8 | 224.3 | 36.3 | 43.7 |

**Table 3: Maximum length of damaged material of insulation sheets**

| Sheets from Example | Length of damaged material [cm] |
|---|---|
| 6 | 16 |
| 7 | 16 |
| 8 | 33 |
| 9 | 18 |

## Claims

1. A process for producing coated foam particles comprising mixing a coating composition comprising
(A) from 10 to 50 wt.-% of an aminoplast resin,
(B) from 10 to 50 wt.-% of an intumescent powder, selected from ammonium phosphate and expandable graphite,
(C) from 0 to 60 wt.-% of water,
(D) from 0 to 10 wt.-% of an acidic hardener, selected from hydrochloric acid, sulfuric acid, phosphoric acid, nitric acid, formic acid, acetic acid, oxalic acid, toluene sulfonic acids, amido sulfonic acids and acid anhydrides,
(E) from 0 to 5 wt.-% of an organic additive, selected from organic fillers, dyes, pigments, surfactants or plasticizers different from components (A) and (D),
(F) from 0 to 50 wt.-% of an inorganic filler, selected form pigments and minerals different from component (B),
with thermoplastic polymer foam particles and drying the coated foam particles.

2. A process according to claim 1, wherein the pH-value of the composition is in the range from 3 to 10, determined according to DIN EN ISO 787-9:2019-06.

3. A process according to claim 1 or 2, wherein the aminoplast resin is a melamine-formaldehyde resin.

4. A process according to any one of claims 1 to 3, wherein the intumescent powder is an expandable graphite having a pH-value between 6 - 8 in an aqueous slurry.

5. A process according to any one of claims 1 to 4, wherein the coating composition comprises 10 to 50 wt.-% gypsum as inorganic filler.

6. A process according to any of claims 1 to 5, wherein the thermoplastic polymer foam particles are pre-foamed expandable polystyrene or expanded polypropylene.

7. A process according to any one of claims 1 to 6 comprising the steps:
(a) pre-expanding expandable polystyrene to foam particles with a density in the range from 10 to 30 kg/m³,
(b) mixing the form particles from step (a) with the composition comprising the components (A) to (F),
(c) drying the coated foam particles at a temperature in the range from 20 to 100 °C for 5 to 500 minutes.

8. Free-flowing coated foam particles based on thermoplastic polymer foam particles, wherein the coating comprises:
(A) from 10 to 50 wt.-% of an aminoplast resin,
(B) from 10 to 50 wt.-% of an intumescent powder, selected from ammonium phosphate and expandable graphite,
(C) from 0 to 20 wt.-% of water,
(D) from 0 to 10 wt.-% of an acidic hardener, selected from hydrochloric acid, sulfuric acid, phosphoric acid, nitric acid, formic acid, acetic acid, oxalic acid, toluene sulfonic acids, amido sulfonic acids and acid anhydrides,
(E) from 0 to 5 wt.-% of an organic additive, selected from organic fillers, dyes, pigments, surfactants or plasticizers different from components (A) and (D),
(F) from 0 to 50 wt.-% of an inorganic filler, selected form pigments and minerals different from component (B).

9. Free-flowing coated foam particles according to claim 8, wherein the weight ratio of coating to uncoated foam particles is in the range from 1 : 1 to 3 : 1.

10. Free-flowing coated foam particles according to claim 8 or 9 having a bulk density in the range from 20 to 50 kg/m³.

11. Free-flowing coated foam particles according to any one of claims 8 to 10, wherein the free-flowing foam particles contain less than 0.1 wt.-% halogen.

12. Free-flowing coated foam particles according to any one of claims 8 to 11, wherein the coating composition comprises 10 to 50 wt.-% gypsum as inorganic filler.

13. A particle foam molding, which is obtainable by steam-chest molding of free-flowing coated foam particles according to any one of claims 8 to 12.

14. A particle foam molding according to claim 13 having a total heat release (THR) for 600 seconds below 10 MJ/m² and a peak heat release rate (PHRR) below 150 kW/m², determined according to ISO 5660-1:2015 using a Cone Calorimeter.

15. A particle foam molding according to claim 13 or 14 having a maximum flame high below 20 cm, determined according to DIN 54837: 2007-12.

16. Use of the particle foam molding according to any one of claims 13 to 15 for thermal insulation of buildings.

## Patentansprüche

1. Verfahren zur Herstellung von beschichteten Schaumstoffpartikeln, umfassend Mischen einer Beschichtungszusammensetzung umfassend
(A) von 10 bis 50 Gew.-% an einem Aminoplastharz,
(B) von 10 bis 50 Gew.-% an einem intumeszenten Pulver ausgewählt aus Ammoniumphosphat und expandierbarem Graphit,
(C) von 0 bis 60 Gew.-% Wasser,
(D) von 0 bis 10 Gew.-% an einem sauren Härter ausgewählt aus Salzsäure, Schwefelsäure, Phosphorsäure, Salpetersäure, Ameisensäure, Essigsäure, Oxalsäure, Toluolsulfonsäuren, Amidosulfonsäuren und Säureanhydriden,
(E) von 0 bis 5 Gew.-% an einem organischen Zusatzstoff ausgewählt aus organischen Füllstoffen, Farbstoffen, Pigmenten, Tensiden und Weichmachern, die von den Komponenten (A) und (D) verschieden sind,
(F) von 0 bis 50 Gew.-% an einem anorganischen Füllstoff ausgewählt aus Pigmenten und Mineralen, die von Komponente (B) verschieden sind,
mit thermoplastischen Polymerschaumstoffpartikeln und Trocknen der beschichteten Schaumstoffpartikel.

2. Verfahren gemäß Anspruch 1, wobei der pH-Wert der Zusammensetzung in dem Bereich von 3 bis 10 liegt, bestimmt gemäß DIN EN ISO 787-9:2019-06.

3. Verfahren gemäß Anspruch 1 oder 2, wobei das Aminoplastharz ein Melaminformaldehydharz ist.

4. Verfahren gemäß einem der Ansprüche 1 bis 3, wobei das intumeszente Pulver ein expandierbarer Graphit mit einem pH-Wert zwischen 6 und 8 in einer wässrigen Aufschlämmung ist.

5. Verfahren gemäß einem der Ansprüche 1 bis 4, wobei die Beschichtungszusammensetzung 10 bis 50 Gew.-% Gips als anorganischen Füllstoff umfasst.

6. Verfahren gemäß einem der Ansprüche 1 bis 5, wobei die thermoplastischen Polymerschaumstoffpartikel vorgeschäumtes expandierbares Polystyrol oder expandiertes Polypropylen sind.

7. Verfahren gemäß einem der Ansprüche 1 bis 6, umfassend die Schritte:
(a) Vorexpandieren von expandierrbarem Polystyrol zu Schaumstoffpartikeln mit einer Dichte in dem Bereich von 10 bis 30 kg/m³,
(b) Mischen der Schaumstoffpartikel aus Schritt (a) mit der Zusammensetzung, die die Komponenten (A) bis (F) umfasst,
(c) Trocknen der beschichteten Schaumstoffpartikel bei einer Temperatur in dem Bereich von 20 bis 100 °C für 5 bis 500 Minuten.

8. Freifließende beschichtete Schaumstoffpartikel auf der Grundlage von thermoplastischen Polymerschaumstoffpartikeln, wobei die Beschichtung umfasst:
(A) von 10 bis 50 Gew.-% an einem Aminoplastharz,
(B) von 10 bis 50 Gew.-% an einem intumeszenten Pulver ausgewählt aus Ammoniumphosphat und expandierbarem Graphit,
(C) von 0 bis 20 Gew.-% Wasser,
(D) von 0 bis 10 Gew.-% an einem sauren Härter ausgewählt aus Salzsäure, Schwefelsäure, Phosphorsäure, Salpetersäure, Ameisensäure, Essigsäure, Oxalsäure, Toluolsulfonsäuren, Amidosulfonsäuren und Säureanhydriden,
(E) von 0 bis 5 Gew.-% an einem organischen Zusatzstoff ausgewählt aus organischen Füllstoffen, Farbstoffen, Pigmenten, Tensiden und Weichmachern, die von den Komponenten (A) und (D) verschieden sind,
(F) von 0 bis 50 Gew.-% an einem anorganischen Füllstoff ausgewählt aus Pigmenten und Mineralen, die von Komponente (B) verschieden sind.

9. Freifließende beschichtete Schaumstoffpartikel gemäß Anspruch 8, wobei das Gewichtsverhältnis von Beschichtung zu unbeschichteten Schaumstoffpartikeln in dem Bereich von 1 : 1 bis 3 : 1.

10. Freifließende beschichtete Schaumstoffpartikel gemäß Anspruch 8 oder 9 mit einer Schüttdichte in dem Bereich von 20 bis 50 kg/m³.

11. Freifließende beschichtete Schaumstoffpartikel gemäß einem der Ansprüche 8 bis 10, wobei die freifließenden Schaumstoffpartikel weniger als 0,1 Gew.-% Halogen enthalten.

12. Freifließende beschichtete Schaumstoffpartikel gemäß einem der Ansprüche 8 bis 11, wobei die Beschichtungszusammensetzung 10 bis 50 Gew.-% Gips als anorganischen Füllstoff umfasst.

13. Partikelschaumstoff-Formkörper, erhältlich durch Dampfkammerformen von freifließenden beschichteten Schaumstoffpartikeln gemäß einem der Ansprüche 8 bis 12.

14. Partikelschaumstoff-Formkörper gemäß Anspruch 13 mit einer Gesamt-Wärmefreisetzung (THR) für 600 Sekunden unter 10 MJ/m² und einer Spitzen-Wärmefreisetzungsrate (PHRR) unter 150 kW/m², bestimmt gemäß ISO 5660-1:2015 unter Verwendung eines Kegelkalorimeters.

15. Partikelschaumstoff-Formkörper gemäß Anspruch 13 oder 14 mit einer höchsten Flammenhöhe unter 20 cm, bestimmt gemäß DIN 54837: 2007-12.

16. Verwendung des Partikelschaumstoff-Formkörpers gemäß einem der Ansprüche 13 bis 15 zur Wärmedämmung von Gebäuden.

## Revendications

1. Procédé de production de particules de mousse enrobées comprenant le mélange d'une composition de revêtement comprenant
(A) de 10 à 50 % en poids d'une résine aminoplaste,
(B) de 10 à 50 % en poids d'une poudre intumescente, choisie parmi le phosphate d'ammonium et le graphite expansible,
(C) de 0 à 60 % en poids d'eau,
(D) de 0 à 10 % en poids d'un durcisseur acide, choisi parmi l'acide chlorhydrique, l'acide sulfurique, l'acide phosphorique, l'acide nitrique, l'acide formique, l'acide acétique, l'acide oxalique, les acides toluènesulfoniques, les acides amidosulfoniques et des anhydrides d'acide,
(E) de 0 à 5 % en poids d'un additif organique, choisi parmi des charges organiques, des colorants, des pigments, des tensioactifs ou des plastifiants différents des composants (A) et (D),
(F) de 0 à 50 % en poids d'une charge inorganique, choisie parmi des pigments et des minéraux différents du composant (B),
avec des particules de mousse de polymère thermoplastique et le séchage des particules de mousse enrobées.

2. Procédé selon la revendication 1, **caractérisé en ce que** le pH de la composition est compris entre 3 et 10, déterminé selon DIN EN ISO 787-9:2019-06.

3. Procédé selon la revendication 1 ou 2, dans lequel la résine aminoplaste est une résine mélamine-formaldéhyde.

4. Procédé selon l'une quelconque des revendications 1 à 3, dans lequel la poudre intumescente est un graphite expansible ayant une valeur de pH comprise entre 6 et 8 dans une suspension concentrée aqueuse.

5. Procédé selon l'une quelconque des revendications 1 à 4, dans lequel la composition de revêtement comprend 10 à 50 % en poids de gypse en tant que charge inorganique.

6. Procédé selon l'une quelconque des revendications 1 à 5, dans lequel les particules de mousse de polymère thermoplastique sont du polystyrène expansible préexpansé ou du polypropylène expansé.

7. Procédé selon l'une quelconque des revendications 1 à 6, comprenant les étapes de :
(a) pré-expansion de polystyrène expansible en particules de mousse de polymère de styrène ayant une masse volumique dans la plage de 10 à 30 kg/m³,
(b) mélange des particules de mousse de l'étape (a) avec la composition comprenant les composants (A) à (F),
(c) séchage des particules de mousse enrobées à une température dans la plage de 20 à 100 °C pendant 5 à 500 minutes.

8. Particules de mousse enrobées fluides à base de particules de mousse de polymère thermoplastique, dans lesquelles l'enrobage comprend :
(A) de 10 à 50 % en poids d'une résine aminoplaste,
(B) de 10 à 50 % en poids d'une poudre intumescente, choisie parmi le phosphate d'ammonium et le graphite expansible,
(C) de 0 à 20 % en poids d'eau,
(D) de 0 à 10 % en poids d'un durcisseur acide, choisi parmi l'acide chlorhydrique, l'acide sulfurique, l'acide phosphorique, l'acide nitrique, l'acide formique, l'acide acétique, l'acide oxalique, les acides toluènesulfoniques, les acides amidosulfoniques et des anhydrides d'acide,
(E) de 0 à 5 % en poids d'un additif organique, choisi parmi des charges organiques, des colorants, des pigments, des tensioactifs ou des plastifiants différents des composants (A) et (D),
(F) de 0 à 50 % en poids d'une charge inorganique, choisie parmi des pigments et des minéraux différents du composant (B).

9. Particules de mousse enrobées fluides selon la revendication 8, dans lesquelles le rapport en poids de l'enrobage entre les particules de mousse enrobées et les particules de mousse non enrobées est dans la plage de 1 : 1 à 3 : 1.

10. Particules de mousse enrobées fluides selon la revendication 8 ou 9 ayant une masse volumique apparente dans la plage de 20 à 50 kg/m³.

11. Particules de mousse enrobées fluides selon l'une quelconque des revendications 8 à 10, les particules de mousse fluides contenant moins de 0,1 % en poids d'halogène.

12. Particules de mousse enrobées fluides selon l'une quelconque des revendications 8 à 11, dans lesquelles la composition de revêtement comprend 10 à 50 % en poids de gypse en tant que charge inorganique.

13. Moulage de mousse de particules, qui peut être obtenu par moulage à la vapeur de particules de mousse enrobées fluides selon l'une quelconque des revendications 8 à 12.

14. Moulage de mousse de particules selon la revendication 13 ayant un dégagement calorifique total (THR) pendant 600 secondes inférieur à 10 MJ/m² et un débit calorifique maximal (PHRR) inférieur à 150 kW/m², déterminé ISO 5660-1:2015 à l'aide d'un calorimètre à cône.

15. Moulage en mousse de particules selon la revendication 13 ou 14 ayant une hauteur de flamme maximale inférieure à 20 cm, déterminée selon DIN 54837 : 2007-12.

16. Utilisation du moulage de mousse de particules selon l'une quelconque des revendications 13 à 15 pour l'isolation thermique de bâtiments.
